# EUROPÄISCHE PATENTSCHRIFT

(11) **EP 0 518 024 B1**
(45) Veröffentlichungstag und Bekanntmachung des Hinweises auf die Patenterteilung: **26.01.1994**
(21) Anmeldenummer: 92106207.1
(22) Anmeldetag: 10.04.1992
(51) Int. Cl.: F03D 11/04, F03D 7/02

(54) **Windkraftanlage**
Wind energy converter
Eolienne

(30) Priorität: 13.06.1991 DE 4119428
(43) Veröffentlichungstag der Anmeldung: 16.12.1992
(73) Patentinhaber: Zuse, Konrad, Dipl.-Ing. Dr.-Ing. mult.E.h., Dr. mult. rer. nat. h.c., Dr.tech. h.c., Dr. h.c. sc.techn., D-36088 Hünfeld (DE)
(72) Erfinder: Zuse, Konrad, Dipl.-Ing. Dr.-Ing. mult.E.h., Dr. mult. rer. nat. h.c., Dr.tech. h.c., Dr. h.c. sc.techn., D-36088 Hünfeld (DE)
(74) Vertreter: Andrejewski, Walter

(56) Entgegenhaltungen:
- DE-A- 4 029 932
- FR-A- 2 519 710

## Beschreibung

Die Erfindung betrifft eine Windkraftanlage mit einem Mast, der eine Mastbasis aufweist, einem nach Maßgabe der Windrichtung um eine vertikale Achse drehbaren Mastkopf und einer in dem Mastkopf gelagerten Propellerwelle mit Anschluß eines Propellers, wobei über die Propellerwelle mittelbar oder unmittelbar ein Generator antreibbar ist, wobei der Mast auf unterschiedliche Masthöhe ein- und ausfahrbar ist, wobei der Propeller auf Propeller-Aufnahmeeinrichtungen, die um die Mastbasis verteilt sind, ablegbar ist, wobei der Mastkopf nach Maßgabe der Propeller-Aufnahmeeinrichtungen um seine vertikale Achse einstellbar ist und wobei bei ausreichend eingefahrenem Mast ein an die Propellerwelle angeschlossener Propeller ablegbar und austauschbar ist.

Bei der bekannten Windkraftanlage, von der die Erfindung ausgeht (DE-OS 40 29 932), hat der Propeller einen vorgegebenen Propellerkreisdurchmesser. In dieser Hinsicht ist die Windkraftanlage fest ausgelegt. eine Anpassung an unterschiedliche Windrichtungen erfolgt durch eine anpassende Drehung des Mastkopfes. Bei auftretenden Starkwinden wird der Mast in seine tiefste Absenkstellung gefahren, um eine Beschädigung der Windkraftanlage durch die Windkraft zu verhindern. Eine weitere Anpassung an unterschiedliche Windgeschwindigkeiten erfolgt nicht. Der Wirkunsgrad der Windraftausnutzung ist hier verbesserungsbedürftig.

Bei einer anderen aus der Praxis bekannten Windkraftanlage, ist der Mast ein turmartiges Bauwerk vorgegebener, unveränderbarer Höhe. Der Propeller hat zwei oder mehr als zwei Propellerblätter und einen vorgegebenen Propellerkreisdurchmesser, so daß die Windkraftanlage insoweit fest ausgelegt ist. Eine Anpassung an unterschiedliche Windrichtungen erfolgt auch hier durch eine anpassende Drehung des Mastkopfes, die gesteuert oder windfahnenähnlich erfolgt. Eine Anpassung an unterschiedliche Windgeschwindigkeiten erfolgt durch eine Verstellung des sogenannten Anstellwinkels der Propellerblätter durch Drehung der Propellerblätter um ihre Achse, die mehr oder weniger orthogonal zur Propellerachse verläuft. Das turmartige Bauwerk insgesamt muß zur Aufnahme auch extremer Windkräfte ausgelegt sein, was ein verhältnismäßig schweres und aufwendiges Bauwerk erforderlich macht, zumal die Windkräfte hauptsächlich auch am Mastkopf und damit über den durch die Masthöhe gegebenen langen Hebelarm am Mast und insbesondere an der Mastbasis angreifen. Das ist aufwendig. Der Wirkungsgrad der Windkraftausnutzung ist auch hier verbesserungsbedürftig, weil gerade bei hohen Windgeschwindigkeiten zur Reduzierung der Windkraft an den Propellerblättern Anstellwinkel erforderlich werden, die die Strömung abreißen lassen.

Der Erfindung liegt die Aufgabe zugrunde, eine Windkraftanlage zu schaffen, die eine verhältnismäßig leichte Maschine darstellt, die an sehr unterschiedliche Windgeschwindigkeiten anpaßbar ist und stets mit hohem Wirkungsgrad der Windkraftausnutzung arbeitet.

Zur Lösung dieser Aufgabe lehrt die Erfindung, daß an die Propellerwelle zumindest zwei in bezug auf den Propellerkreisdurchmesser unterschiedliche Propeller anschließbar sind, daß der Mast nach Maßgabe der Windgeschwindigkeit auf unterschiedliche Masthöhe einstellbar ist, daß die unterschiedlichen Propeller auf Propeller-Aufnahmeeinrichtungen, die um die Mastbasis verteilt sind, ablegbar sind und daß bei ausreichend eingefahrenem Mast ein an die Propellerwelle angeschlossener Propeller in eine Propeller-Aufnahmeeinrichtung ablegbar bzw. ein in einer Propeller-Aufnahmeeinrichtung abgelegter Propeller an die freie Propellerwelle anschließbar ist. - Das Merkmal, daß der Mast ein- und ausfahrbar ist, läßt offen, wie dieses Ein- und Ausfahren im einzelnen geschieht. Das Merkmal besagt lediglich, daß der Mastkopf durch Verlängerung der freien Mastlänge über der Erde auf unterschiedliche Höhe einstellbar ist.

Eine Ausführungsform der Erfindung ist in diesem Zusammenhang dadurch gekennzeichnet, daß der Mast aus einzelnen Mastelementen zusammengesetzt ist, die in zumindest einem Magazin untergebracht und zum Ein- und Ausfahren des Mastes in diesen einbaubar bzw. aus diesem ausbaubar sind. Der Mast kann dabei teleskopartig ein- und ausfahrbar sein. Es besteht aber auch die Möglichkeit, die Anordnung so zu treffen, daß die Mastbasis eine Mastgrube aufweist und der Mast (als Ganzes) in die Mastgrube einfahrbar und aus dieser ausfahrbar ist.

Turmartige Bauwerke in Form eines Mastes, die ein- und ausfahrbar sind und mit dem Mastkopf auf unterschiedliche Höhe einstellbar sind, sind an sich bekannt. So ist es bekannt (CH 431 917) Mastabschnitte beim Ausfahren aufeinander zu setzen und beim Einfahren wieder aus dem Mast herauszunehmen, beispielsweise um auf Sportplätzen am Mast Leuchten zu installieren. So ist es auch bekannt ( US 34 51 182) einen spiralförmig gewickelten Mastmantel schraubenwendelförmig auszuziehen und wieder einzufahren. Zwar sind solche Mastbauwerke im Rahmen der Erfindung einsetzbar, die Entwicklung von Windkraftanlagen ist jedoch durch solche Mastbauwerke bisher nicht beeinflußt worden. Für die erfindungsgemäßen Windkraftanlagen besonders geeignet ist eine lediglich gemäß PatG §3 (2) zum Stand der Technik gehörende Ausführungsform (DE 40 24 574.8) bei der einzelne schalenförmige Bauelemente schraubenwendelförmig zusammensetzbar sind und die Höhe des Mastkopfes durch Einbau bzw. Ausbau solcher Bauelemente veränderbar ist.

Die Erfindung geht von der Erkenntnis aus, daß bei einer Windkraftanlage, die auf einfache Weise und bei gutem Wirkungsgrad an unterschiedliche Windgeschwindigkeiten anpaßbar sein soll, der Mast zu einer Maschine werden muß, deren Höhe aus statischen und stabilitätsmäßigen Gründen der Windgeschwindigkeit anpaßbar ist, und die darüber hinaus auf einfache Weise nach Maßgabe der Windgeschwindigkeit ein Auswechseln des Propellers ermöglicht, um bei allen Windgeschwindigkeiten mit günstigem Wirkungsgrad zu arbeiten. Das schließt nicht aus, daß außerdem, wie eingangs beschrieben, eine Drehung der Propellerblätter um ihre Achse, die mehr oder weniger orthogonal zur Propellerachse verläuft, zum Zwecke der Anpassung des Anstellwinkels an die Windgeschwindigkeiten vorzunehmen. Nach bevorzugter Ausführungsform der Erfindung ist von den Propellern zumindest einer mit kleinem Propellerkreisdurchmesser als Schnelläufer für hohe Windgeschwindigkeiten und einer mit großem Propellerkreisdurchmesser für niedrige Windgeschwindigkeiten ausgelegt. Das Auswechseln der Propeller erfolgt zweckmäßigerweise automatisch, wozu auf die Hilfsmittel der modernen Handlings- und Steuerungstechnik zurückgegriffen werden kann.

Die Einstellung der erfindungsgemäßen Windkraftanlage auf sich ändernde Windgeschwindigkeiten kann mit den Mitteln der modernen Meß- und Steuerungstechnik sowie mit den Hilfsmitteln der modernen Antriebstechnik ohne Schwierigkeiten und auf verschiedene Weise verwirklicht werden. Die Erfindung lehrt dazu, daß der Mast einen Einfahr/Ausfahr-Antrieb aufweist, der mit einer Steuereinrichtung versehen ist, die nach zeitlichem Programm und/oder nach Maßgabe von zugeführten Meßwerten für die Windgeschwindigkeit arbeitet, und daß die Steuereinrichtung die Masthöhe und/oder das Auswechseln der Propeller steuert. Nach bevorzugter Ausführungsform ist dabei die Anordnung so getroffen, daß die Steuereinrichtung mit einem Rechner ausgerüstet ist und daß die Meßwerte für die Windgeschwindigkeit dem Rechner zuführbar sind, der die Steuereinrichtung entsprechend betätigt. Es versteht sich, daß die Windgeschwindigkeit ein Vektor ist, zu dem eine Richtung und eine skalare Größe gehören.

Folglich kann die Steuereinrichtung im Rahmen der Erfindung auch eine Einstellung des Propellers auf die Windrichtung bewirken. Zweckmäßigerweise ist der Mast über die Steuereinrichtung und den Rechner entsprechend den gemessenen Windgeschwindigkeiten nach Maßgabe vorgegebener Höhenstufen ein- und ausfahrbar, und zwar so, daß nach Überschreitung bzw. Unterschreitung von vorgegebenen Schwellwerten das Einfahren bzw. Ausfahren erfolgt. Es empfiehlt sich, die Auslegung so zu treffen, daß der Mast über die Steuereinrichtung und den Rechner bei böigen Winden nach Maximalwerten der Windgeschwindigkeit, die vom Rechner für vorgegebene Zeitspannen ermittelt sind, ein- und ausfahrbar ist.

Im folgenden wird die Erfindung anhand einer lediglich ein Ausführungsbeispiel darstellenden Zeichnung ausführlicher erläutert. Es zeigen in schematischer Darstellung
- Fig. 1: eine Ansicht der erfindungsgemäßen Windkraftanlage mit einem Mast,
- Fig. 2: den Gegenstand nach Fig. 1 in anderer Funktionsstellung,
- Fig. 3: eine Draufsicht auf den Gegenstand nach Fig. 2, und
- Fig. 4: eine graphische Darstellung zur Erläuterung von steuerungstechnischen Maßnahmen bei der Windkraftanlage nach Fig. 1.

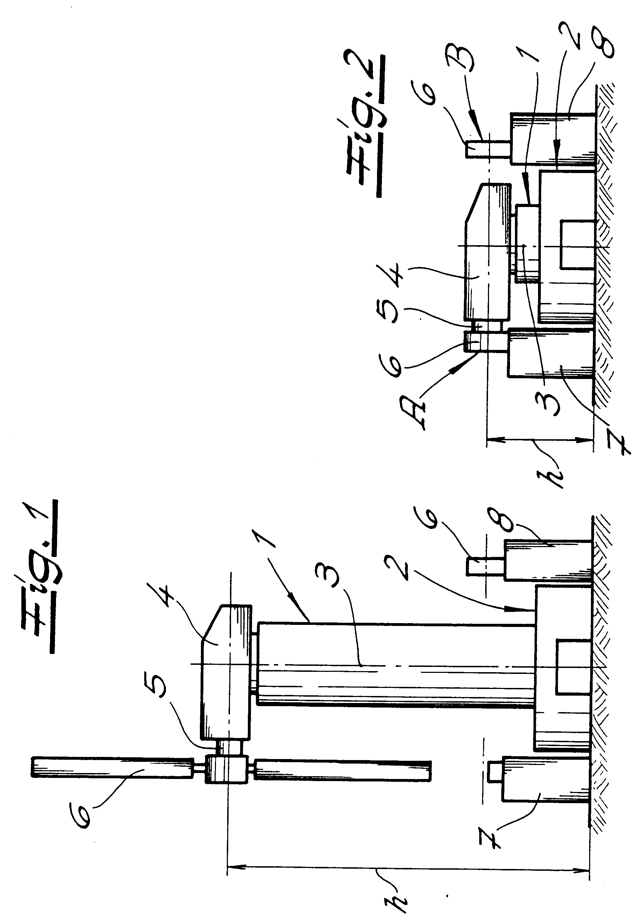

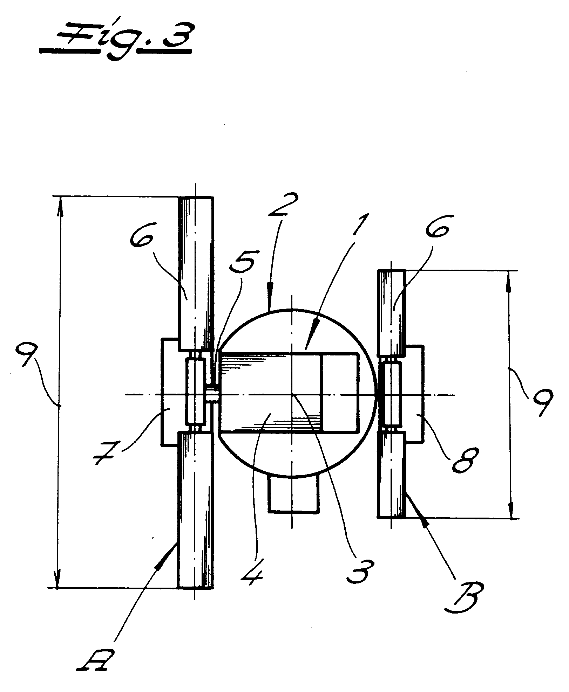

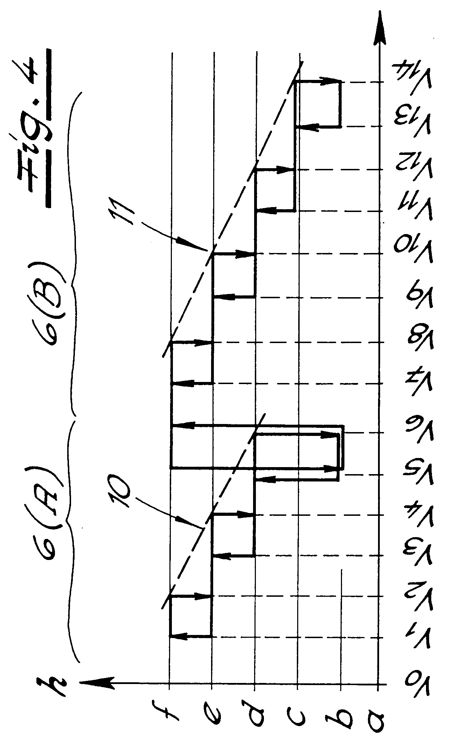

Die in den Fig. 1 und 3 dargestellte Windkraftanlage besitzt einen Mast 1, der eine Mastbasis 2 aufweist, und einen nach Maßgabe der Windrichtung um eine vertikale Achse 3 drehbaren Mastkopf 4. In dem Mastkopf 4 ist eine Propellerwelle 5 gelagert, die zum Anschluß eines Propellers 6 eingerichtet ist. Über die Propellerwelle 5 ist mittelbar oder unmittelbar ein Generator angeschlossen, der die von dem Propeller 6 aufgenommene Windenergie in elektrische Energie umsetzt.

Aus einer vergleichenden Betrachtung der Fig. 1 bis 3 entnimmt man zunächst, daß der Mast 1 auf unterschiedliche Masthöhe h ein- und ausfahrbar ist. An die Propellerwelle 5 sind zumindest zwei in bezug auf den Propellerkreisdurchmesser unterschiedliche Propeller anschließbar, die in den Fig. 2 und 3 erkennbar und dort durch die Zusätze A und B differenziert sind. Die unterschiedlichen Propeller 6 sind auf Propeller-Aufnahmeeinrichtungen 7, 8, die um die Mastbasis 2 verteilt sind, ablegbar. Der Mastkopf 4 ist nach Maßgabe der Propeller-Aufnahmeeinrichtung 7, 8 um seine vertikale Achse 3 einstellbar. Die Anordnung und Auslegung im Ganzen sind so getroffen, daß der Mast 1 nach Maßgabe der Windgeschwindigkeit auf unterschiedliche Masthöhe h einstellbar ist. Die Anordnung ist fernerhin so getroffen, daß bei ausreichend eingefahrenem Mast 1 ein an die Propellerwelle 5 angeschlossener Propeller 6 in eine Propeller-Aufnahmeeinrichtung 7 bzw. 8 ablegbar ist bzw. ein in einer Propeller-Aufnahmeeinrichtung 7 bzw. 8 abgelegter Propeller 6 an die freie Propellerwelle 5 anschließbar ist. Im Ausführungsbeispiel und nach bevorzugter Ausführungsform der Erfindung mag der Mast 1 aus einzelnen Mastelementen zusammengesetzt sein, die in zumindest einem Magazin untergebracht und zum Ausfahren bzw. Einfahren des Mastes in diesem einbaubar bzw. aus diesem ausbaubar sind. Nicht gezeichnet wurde, daß der Mast auch teleskopartig ein- und ausfahrbar sein kann oder daß er als Ganzes beim Einfahren in eine Mastgrube eingeführt werden kann.

Aus der Fig. 3 entnimmt man, daß von den Propellern 6 einer mit kleinem Propellerkreisdurchmesser 9 als Schnelläufer für hohe Windgeschwindigkeiten ausgeführt ist, während ein anderer mit großem Propellerkreisdurchmesser 9 für niedrige Windgeschwindigkeiten eingerichtet ist. - Nicht dargestellt wurden die Meß- und Steuereinrichtungen, auf die sich die Ansprüche 7 bis 9 beziehen.

Zur Erläuterung der den Ansprüchen 7 und 8 entsprechenden Maßnahmen wird auf die Fig. 4 verwiesen: Auf der Abszissenachse der Fig. 4 ist die Windgeschwindigkeit mit den Werten v₀ bis v₁₄ dargestellt worden, auf der Ordinatenachse findet sich die Masthöhe h, deren Werte von a bis f angegeben sind, genauer die Höhen der Propellerachse im Mastkopf. Die Kurve 10 gibt für die Betriebsweise mit Propellern 6 großen Propellerkreisdurchmessers 9 bei verhältnismäßig kleinen Windgeschwindigkeiten v₀ bis v₆ die Masthöhe an. Die Kurve 11 gibt entsprechend bei verhältnismäßig großen Windgeschwindigkeiten v₆ bis v₁₄ die Masthöhen an, wobei sich auf der Propellerachse 5 ein Propeller 6 mit verhältnismäßig kleinem Propellerkreisdurchmesser 9 befindet. Die Fig. 4 zeigt, wie die verschiedenen Höhen der Propellerwelle bei verschiedenen Windgeschwindigkeiten eingestellt werden, und zwar für beide Propeller 6. Der Langsamläufer 6 wird bis zur Windgeschwindigkeit v₆ benutzt, wobei als Funktion der Windgeschwindigkeit verschiedene Arbeitshöhen d, e, f eingestellt werden können. Der Wechsel der Höhe erfolgt mit einer gewissen Toleranz und Trägheit, so daß bei schnell wechselnden Windgeschwindigkeiten (Böen) der Mast 1 nicht fortwährend auf- und abgefahren werden muß. So wird zum Beispiel bei v₄, wenn sich die Welle 5 auf Höhe e befindet, diese auf die Höhe d gefahren. Läßt die Windstärke wieder nach, so wird die Welle 5 aber nicht sofort wieder heraufgefahren, sondern erst bei Geschwindigkeit v₃.

Dasselbe gilt für die Umstellung von einem Propeller 6 auf den anderen. Bei v₆ erfolgt die Umstellung auf den schnellaufenden Propeller 6, zu dem die Kurve 11 gehört. Wegen seines geringeren Durchmessers kann er bei höherer Windstärke auf die Höhe b herabgefahren werden.

Es empfiehlt sich, als Berechnungsgrundlage nicht die unmittelbar gemessene Windgeschwindigkeit zu verwenden, sondern eine abgeleitete Berechnungsgeschwindigkeit zu verwenden, die dem Maximalwert der in der vergangenen Zeitspanne von beispielsweise einer Stunde aufgetretenen Windgeschwindigkeit entspricht. Dadurch wird der Einfluß einzelner Böen vermindert und ein zu häufiges Auf- und Abfahren des Turms vermieden. Diese Berechnungsgeschwindigkeit kann auf verschiedene Weise ermittelt werden. Beispielsweise wird die Windgeschwindigkeit über einen Analog-Digital-Wandler auf ein Schieberegister geleitet, welches in einem Zeitabstand Delta t fortgeschaltet wird. Es sind dann die in der vorhergehenden Zeitspanne auftretenden Windgeschwindigkeiten in diesem Schieberegister gespeichert. Daraus kann jeweils der Maximalwert ermittelt werden. Dieser wird der Berechnung entsprechend Fig. 4 zugrundegelegt.

## Patentansprüche

1. Windkraftanlage mit einem Mast (1), der eine Mastbasis (2) aufweist, einem nach Maßgabe der Windrichtung um eine vertikale Achse drehbaren Mastkopf (4) und einer in dem Mastkopf (4) gelagerten Propellerwelle (5) mit Anschluß eines Propellers (6), wobei über die Propellerwelle (5) mittelbar oder unmittelbar ein Generator antreibbar ist. wobei der Mast (1) auf unterschiedliche Masthöhe (h) ein- und ausfahrbar ist, wobei der Propeller (6) auf Propeller-Aufnahmeeinrichtungen (7, 8), die um die Mastbasis (2) verteilt sind, ablegbar ist, wobei der Mastkopf (4) nach Maßgabe der Propeller-Aufnahmeeinrichtungen (7, 8) um seine vertikale Achse einstellbar ist, wobei bei ausreichend eingefahrenem Mast (1) ein an die Propellerwelle (5) angeschlossener Propeller (6) ablegbar und austauschbar ist, **dadurch gekennzeichnet**, daß an die Propellerwelle (5) zumindest zwei in bezug auf den Propellerkreisdurchmesser (9) unterschiedliche Propeller (6) anschließbar sind, daß der Mast (1) nach Maßgabe der Windgeschwindigkeit auf unterschiedliche Masthöhe (h) einstellbar ist, daß die unterschiedlichen Propeller (6) auf Propeller-Aufnahmeeinrichtungen (7, 8), die um die Mastbasis (2) verteilt sind, ablegbar sind und daß bei ausreichend eingefahrenem Mast (1) ein an die Propellerwelle (5) angeschlossener Propeller (6) in eine Propeller-Aufnahmeeinrichtung (7, 8) ablegbar bzw. ein in eine Propeller-Aufnahmeeinrichtung (7, 8) abgelegter Propeller (6) an die freie Propellerwelle (5) anschließbar ist.

2. Windkraftanlage nach Anspruch 1, dadurch gekennzeichnet, daß der Mast (1) aus einzelnen Mastelementen zusammengesetzt ist, die in zumindest einem Magazin untergebracht und zum Ausfahren bzw. Einfahren des Mastes in diese einbaubar bzw. aus diesem ausbaubar sind.

3. Windkraftanlage nach Anspruch 1, dadurch gekennzeichnet, daß der Mast (1) teleskopartig ein- und ausfahrbar ist.

4. Windkraftanlage nach Anspruch 1, dadurch gekennzeichnet, daß die Mastbasis (2) eine Mastgrube aufweist und der Mast (1) in die Mastgrube ein- und ausfahrbar ist.

5. Windkraftanlage nach einem der Ansprüche 1 bis 4, dadurch gekennzeichnet, daß von den Propellern (6) zumindest einer mit kleinem Propellerkreisdurchmesser (9) als Schnelläufer für hohe Windgeschwindigkeiten und einer mit großem Propellerkreisdurchmesser (9) für niedrige Windgeschwindigkeiten ausgelegt sind.

6. Windkraftanlage nach einem der Ansprüche 1 bis 5, dadurch gekennzeichnet, daß der Mast einen Einfahr/Ausfahr-Antrieb aufweist, der mit einer Steuereinrichtung versehen ist, die nach zeitlichem Programm und/oder nach Maßgabe von zugeführten Meßwerten für die Windgeschwindigkeit arbeitet, und daß die Steuereinrichtung die Masthöhe und/oder das Auswechseln der Propeller steuert.

7. Windkraftanlage nach Anspruch 6, dadurch gekennzeichnet, daß die Steuereinrichtung mit einem Rechner ausgerüstet ist, in dem die für einen vorgegebenen Propeller bzw. eine vorgegebene Windgeschwindigkeit maximale Masthöhe gespeichert ist, und daß die Meßwerte für die Windgeschwindigkeit dem Rechner zuführbar sind, der die Steuereinrichtung entsprechend betätigt.

8. Windkraftanlage nach Anspruch 7, dadurch gekennzeichnet, daß der Mast über die Steuereinrichtung und den Rechner entsprechend den gemessenen Windgeschwindigkeiten nach Maßgabe vorgegebener Höhenstufen ein- und ausfahrbar ist, und zwar so, daß nach Überschreitung bzw. Unterschreitung von vorgegebenen Schwellwerten das Einfahren bzw. das Ausfahren erfolgt.

9. Windkraftanlage nach Anspruch 8, dadurch gekennzeichnet, daß der Mast über die Steuereinrichtung und den Rechner (bei böigen Winden) nach Maximalwerten der Windgeschwindigkeit, die vom Rechner für vorgegebene Zeitspannen ermittelt sind, ein- und ausfahrbar ist.

10. Windkraftanlage nach einem der Ansprüche 1 bis 9, dadurch gekennzeichnet, daß das Auswechseln der Propeller automatisch durchführbar ist.

## Claims

1. A wind power facility with a mast (1) having a mast base (2), a mast head (4) rotatable about a vertical axis according to wind direction, and a propeller shaft (5) running on bearings in the mast head (4) with connection of a propeller (6), whereby a generator is indirectly or directly drivable via the propeller shaft (5), whereby the mast (1) is extendable and retractable to various mast heights (h), whereby the propeller (6) is depositable onto propeller receiving means (7, 8) distributed about the mast base (2), whereby the mast head (4) is adjustable about its vertical axis according to the propeller receiving means (7, 8), whereby a propeller (6) connected to the propeller shaft (5), with the mast (1) sufficiently retracted, is depositable and exchangeable, **characterised in that** at least two different propellers (6) are connectable to the propeller shaft (5) relative to the circle diameter of the propeller (9), that the mast (1) is adjustable to various mast heights (h) according to the wind velocity, that the different propellers (6) are depositable onto the propeller receiving means (7, 8) which are distributed about the mast base (2), and that a propeller (6) connected to the propeller shaft (5) is depositable into a propeller receiving means (7, 8) and a propeller (6) deposited into a propeller receiving means (7, 8) respectively is connectable to the free propeller shaft (5) with the mast (1) sufficiently retracted.

2. A wind power facility according to claim 1, **characterised in that** the mast (1) consists of individual mast elements which are located mountably and dismountably respectively at least in a magazine for extending and retracting the mast respectively.

3. A wind power facility according to claim 1, **characterised in that** the mast (1) is telescopically retractable and extendable.

4. A wind power facility according to claim 1, **characterised in that** the mast base (2) has a mast pit, and the mast (1) can be moved in and out of the mast pit.

5. A wind power facility according to any of claims 1 to 4, **characterised in that** at least one of the propellers (6) having a small propeller circle diameter (9) is designed as a high-speed propeller for high wind velocities, and one with a large propeller circle diameter (9) is designed for low wind velocities.

6. A wind power facility according to any of claims 1 to 5, **characterised in that** the mast has a retracting/extending drive which is provided with a control means that operates according to a time-controlled program and/or according to measuring value inputs for the wind velocity, and that the control means controls the mast height and/or the exchange of the propellers.

7. A wind power facility according to claim 6, **characterised in that** the control means is equipped with a computer in which the max. mast height for a pre-set propeller and a pre-set wind velocity respectively is memorised, and that the values measured for the wind velocity can be put into the computer which actuates the control means correspondingly.

8. A wind power facility according to claim 7, **characterised in that** the mast is retractable and extendable via the control means and the computer corresponding with the measured wind velocities according to pre-set height steps in such a way that retracting and extending respectively is performed after exceeding or falling short of pre-set threshold values.

9. A wind power facility according to claim 8, **characterised in that** the mast is retractable and extendable via the control means and the computer (in case of gusty winds) according to max. values of the wind velocity determined by the computer for pre-set periods of time.

10. A wind power facility according to any of claims 1 to 9, **characterised in that** exchanging the propellers is automatically feasible.

## Revendications

1. Eolienne avec un pylône (1) qui présente une base de pylône (2), une tête de pylône (4) tournant autour d'un axe vertical suivant la direction du vent et un arbre porte-hélice (5) logé dans la tête du pylône (4) avec raccordement d'une hélice (6), un générateur pouvant être entraîné directement ou indirectement par l'intermédiaire de l'arbre porte-hélice (5), le pylône (1) pouvant être rentré et sorti à différentes hauteurs de pylône (h), l'hélice (6) pouvant être déposée sur des dispositifs de logement d'hélice (7, 8) répartis autour de la base du pylône (2), la tête du pylône (4) pouvant être ajustée autour de son axe vertical suivant les dispositifs de logement d'hélice (7, 8), une hélice (6) raccordée à l'arbre porte-hélice (5) pouvant être déposée et remplacée si le pylône (1) est suffisamment rentré, **caractérisée par le fait** que deux hélices (6) au moins, différentes de par le diamètre du cercle balayé par leurs pales (9), peuvent être raccordées à l'arbre porte-hélice (5), que le pylône (1) peut être ajusté à différentes hauteurs de pylône (h) suivant la vitesse du vent, que les différentes hélices (6) peuvent être déposées sur des dispositifs de logement d'hélice (7, 8) répartis autour de la base du pylône (2) et qu'une hélice (6) raccordée à l'arbre porte-hélice (5) peut être déposée dans un dispositif de logement d'hélice (7, 8) ou qu'une hélice (6) déposée dans un dispositif de logement d'hélice (7, 8) peut être raccordée à l'arbre porte-hélice (5) libre si le pylône (1) est suffisamment rentré.

2. Eolienne selon la revendication 1, **caractérisée par le fait** que le pylône (1) se compose de différents éléments de pylône qui sont logés dans un magasin au moins et peuvent être montés dans ce dernier et démontés de ce dernier pour la sortie ou la rentrée du pylône.

3. Eolienne selon la revendication 1, **caractérisée par le fait** que le pylône (1) peut être rentré et sorti à la manière d'un télescope.

4. Eolienne selon la revendication 1, **caractérisée par le fait** que la base du pylône (2) présente une fosse de pylône et que le pylône (1) peut être rentré dans la fosse du pylône et sorti de la fosse du pylône.

5. Eolienne selon l'une des revendications de 1 à 4, **caractérisée par le fait** que, parmi les hélices (6), une hélice au moins caractérisée par un petit diamètre du cercle balayé par ses pales (9) est conçue comme rotor rapide pour les vitesses de vent élevées, et une hélice caractérisée par un grand diamètre du cercle balayé par ses pales (9) est conçue pour les vitesses de vent élevées.

6. Eolienne selon l'une des revendications de 1 à 5, **caractérisée par le fait** que le pylône présente un entraînement de rentrée/sortie muni d'un dis positif de commande qui fonctionne selon un programme temporel et/ou suivant des valeurs mesurées fournies pour la vitesse du vent et que le dispositif commande la hauteur du pylône et/ou le remplacement des hélices.

7. Eolienne selon la revendication 6, **caractérisée par le fait** que le dispositif de commande est équipé d'un ordinateur dans lequel est mémorisée la hauteur de pylône maximum pour une hélice prescrite ou pour une vitesse du vent prescrite et que les valeurs mesurées pour la vitesse du vent peuvent être fournies à l'ordinateur qui actionne en conséquence le dispositif de commande.

8. Eolienne selon la revendication 7, **caractérisée par le fait** que le pylône peut être rentré et sorti par l'intermédiaire du dispositif de commande et de l'ordinateur en fonction des vitesses du vent mesurées suivant des nivellements prescrits, c'est-à-dire que la rentrée ou la sortie se font après le dépassement par le haut ou par le bas des valeurs-limites prescrites.

9. Eolienne selon la revendication 8, **caractérisée par le fait** que le pylône peut être rentré ou sorti par l'intermédiaire du dispositif de commande et de l'ordinateur (en présence de vent à rafales) selon les valeurs maximales de la vitesse du vent calculées par l'ordinateur pour des périodes de temps prescrites.

10. Eolienne selon l'une des revendications de 1 à 9, **caractérisée par le fait** que le remplacement des hélices peut être exécuté automatiquement.
